# EUROPÄISCHE PATENTSCHRIFT

(11) **EP 3 526 852 B1**
(45) Veröffentlichungstag und Bekanntmachung des Hinweises auf die Patenterteilung: **09.04.2025**
(21) Anmeldenummer: 17783498.3
(22) Anmeldetag: 12.10.2017
(51) Int. Cl.: H01M 10/48, G01K 1/00, B60L 58/10, G01K 1/16, B60L 50/64

(54) **BATTERIEZELLE MIT TEMPERATURSENSOR**
BATTERY CELL COMPRISING A TEMPERATURE SENSOR
ÉLÉMENT DE BATTERIE POURVU D'UN CAPTEUR DE TEMPÉRATURE

(30) Priorität: 12.10.2016 DE 102016219840
(43) Veröffentlichungstag der Anmeldung: 21.08.2019
(73) Patentinhaber: Bayerische Motoren Werke Aktiengesellschaft, 80809 München (DE)
(72) Erfinder: BORN, Christoph, 80935 München (DE); KULP, Christian, 80639 München (DE); MENCK, Arne, 80995 München (DE); PAUL, Sebastian, 80999 München (DE); SCHMIDT, Jan Philipp, 80997 München (DE); SCHWEIGER, Benno, 80337 München (DE); VETTER, Jens, 85241 Hebertshausen (DE); ZEHENTNER, Hermann, 84432 Hohenpolding (DE); ZIEGLTRUM, Dieter, 85591 Vaterstetten (DE); SELIGER, Werner, 85399 Hallbergmoos (DE)
(86) Internationale Anmeldenummer: PCT/EP2017/076038
(87) Internationale Veröffentlichungsnummer: WO 2018/069434

(56) Entgegenhaltungen:
- CN-U- 205 104 584
- DE-A1- 10 154 920
- DE-U1- 202012 012 655
- JP-A- 2006 250 734
- JP-A- 2008 258 089
- JP-U- H0 561 956
- US-A1- 2013 004 811

## Beschreibung

Die vorliegende Erfindung betrifft eine Batteriezelle gemäß dem Oberbegriff des Patentanspruchs 1, eine Hochvoltbatterie gemäß dem Oberbegriff des Patentanspruchs 4 und ein Elektrofahrzeug oder ein Hybridfahrzeug gemäß dem Oberbegriff des Patentanspruchs 5.

Batteriezellen einer Hochvoltbatterie für ein Kraftfahrzeug bzw. Elektro- oder Hybridfahrzeug werden bevorzugt auf Basis von Lithium-Ionen-Zellen aufgebaut. Unter einem Hochvolt- Bordnetz in einem Elektrofahrzeug oder Hybridfahrzeug wird üblicherweise ein Bordnetz mit einer Betriebsspannung von z.B. 60 - 400 Volt bei Betrieb verstanden. Üblicherweise ist der Betrieb einer Hochvoltbatterie mit optimalem Wirkungsgrad in einem Temperaturbereich von ca. 15 - 40 °C. Einerseits könnte die Batteriezellen beschädigt werden, wenn die Temperatur der Batteriezellen zu hoch ist. Andererseits weisen die Batteriezellen als elektrochemische Zellen bei niedrigen Temperaturen eine geringere Kapazität und elektrische Leistungsbereitstellung als bei optimaler Betriebstemperatur auf. Aus diesem Grund ist normalerweise ein Temperatursensor an einer Batteriezelle angeordnet, um die Temperatur des Zellinneren der Batteriezelle zu messen. Die gemessene Temperaturinformation wird durch eine Signalleitung zu einer in der Hochvoltbatterie befindlichen Steuereinheit übertragen. Die Steuereinheit der Hochvoltbatterie entscheidet dann, ob die aktuelle Temperatur der Batteriezelle in einem vorgegebenen Temperaturbereich liegt.

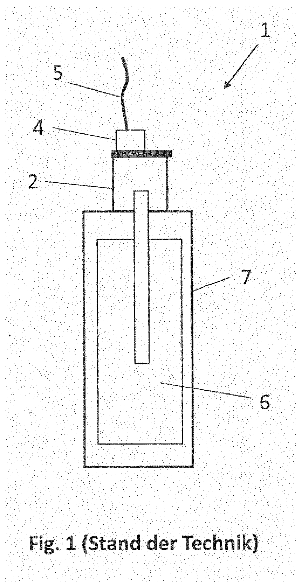

Fig. 1 zeigt eine aus dem Stand der Technik bekannte Batteriezelle mit einem Temperatursensor. Die Batteriezelle 1 weist ein Gehäuse 7 und ein sich innerhalb des Gehäuses 7 befindendes Zellinneres 6 auf. Der Temperatursensor 4, der eine Signalleitung 5 aufweist, ist auf einem elektrischen Anschluss 2, bzw. Terminal, der Batteriezelle 1 angeordnet, um die Temperatur des sich innerhalb des Gehäuses 7 befindenden Zellinneren 6 der Batteriezellen zu messen. Der Temperatursensor 4 ist normalerweise an den elektrischen Anschluss 2 oder an das Gehäuse 7 der Batteriezelle 1 angeschweißt.

JPH0561956 U betrifft eine Batterie, die eine Elektrolytlösung verwendet, insbesondere ist es möglich, die Menge und die Temperatur der Elektrolytlösung von Autobatterien zu erfassen.

JP2008258089 A betrifft eine Batterie zum Starten des Motors eines Fahrzeugs, die mit einem Sensor für den Flüssigkeitsstand einer Elektrolytlösung ausgestattet ist.

US2013004811 A1 betrifft eine elektrische Batterie, deren Wärmemanagement mithilfe von Temperatursensoren durchgeführt wird.

CN 205 104 584 U betrifft eine bolzenartige Batterietemperatursonde, die ein Befestigungsmittel, eine Dichtungsscheibe, einen Temperatursensor, eine Schließplatte, einen Temperatursensorausgang aufweist. Die Dichtungsunterlegscheibe und das obere Ende des Kopfes bilden einen Hohlraum, der den Temperaturfühler halten kann. Ferner, ist das Befestigungsteil aus Metall gebildet.

JP2006250734A offenbart ein wärmeleitendes Blech als Temperaturdetektor für eine Batterie bestehend aus mehreren gestapelten flachen Batteriezellen und einen Temperatursensor zur Erfassung der Temperatur des wärmeleitenden Blechs.

Wie oben erwähnt, ist es wichtig, die Temperatur des Zellinneren der Batteriezelle zu messen. Jedoch weist die Anbringungsstelle des Temperatursensors 4 einen deutlichen Abstand zum Zellinneren 6 auf, dessen Temperatur gemessen werden soll. Da das Gehäuse 7 bzw. das in das Gehäuse 7 gefüllte Gas die Wärmeübertragung zwischen dem Zellinneren 6 und dem Temperatursensor 4 beeinträchtigen können, kann die aktuelle Temperatur des Zellinneren 6 weder schnell noch genau durch den Temperatursensor 4 gemessen werden.

Aufgabe der vorliegenden Erfindung ist es, eine kostengünstige Batteriezelle zu schaffen, die eine genauere Messung der aktuellen Temperatur der Batteriezelle, insbesondere des Zellinneren der Batteriezelle, ermöglicht, sowie eine Hochvoltbatterie mit mindestens einer solchen Batteriezelle und ein Elektro- oder Hybridfahrzeug mit einer solchen Hochvoltbatterie.

Diese Aufgabe wird durch die Merkmale des Patentanspruches 1, 4 bzw. 5 gelöst.

Vorteilhafte Ausgestaltungen und Weiterbildungen der Erfindung sind den Unteransprüchen zu entnehmen, wobei auch Kombinationen der einzelnen Anspruchsmerkmale untereinander möglich sind.

### Offenbarung der Erfindung

Die erfindungsgemäße Batteriezelle weist eine Elektrode, ein Gehäuse, ein sich innerhalb des Gehäuses befindendes Zellinneres und einen Temperatursensor auf. Die Batteriezelle weist ein wärmeleitendes Teil auf, wobei das wärmeleitende Teil von der Elektrode unterschiedlich ist und ganz oder teilweise im Gehäuse der Batteriezelle angeordnet ist und thermisch mit dem Temperatursensor verbunden ist.

Gemäß der Erfindung ist das wärmeleitende Teil, welches aus einem wärmeleitenden Material gebildet werden kann, ganz oder teilweise im Gehäuse der Batteriezelle angeordnet. Deswegen weist das wärmeleitende Teil eine gleichhohe oder sehr ähnliche Temperatur auf, wie das Zellinnere der Batteriezelle. Wegen der thermischen Verbindung zwischen dem Temperatursensor und dem wärmeleitenden Teil kann die aktuelle Temperatur des Zellinneren mittels des Temperatursensors schnell und genau detektiert werden.

Da Ströme über die Elektrode der Batteriezelle fließen, können die Ströme die Temperatur der Elektrode stark beeinflussen. Deswegen ist die Elektrode für eine Nutzung als wärmeleitendes Teil nicht geeignet, als das wärmeleitende Teil zu benutzen. Daher ist das wärmeleitende Teil von der Elektrode unterschiedlich.

Ein gut wärmeleitendes Material kann beispielsweise Metall (Aluminium, Kupfer, Stahl usw.) oder Wärmeleitpad bzw. Wärmeleitpaste aus z.B. Silikongummi-Folien sein. Des Weiteren ist der Einsatz von Heatpipes als hervorragende Wärmeleiter möglich. Der Wert der Wärmeleitfähigkeit des obengenannten wärmeleitenden Teils liegt über 3,5 W/(m · K).

Im Vergleich mit dem in Fig. 1 gezeigten Stand der Technik ist die Wärmeübertragung zwischen dem Zellinneren und dem Temperatursensor gemäß der Erfindung optimiert, weil eine wärmeleitende Brücke zwischen dem Zellinneren und dem Temperatursensor durch das wärmeleitende Teil gebildet wird. Daher kann die aktuelle Temperatur sowie die Temperaturänderung des Zellinneren möglichst schnell erkannt werden.

Gemäß der Erfindung ist der Temperatursensor außerhalb des Gehäuses angeordnet.

Nach einer Weiterbildung der Erfindung ist der Temperatursensor am Gehäuse angeordnet.

Nach einer Weiterbildung der Erfindung steht das wärmeleitende Teil in unmittelbarem Wärmekontakt mit dem Temperatursensor.

Gemäß der Erfindung steht das wärmeleitende Teil in unmittelbarem Wärmekontakt mit dem Zellinneren.

Deswegen kann das wärmeleitende Teil eine thermische Verbindung zwischen dem Zellinneren und dem Temperatursensor herstellen.

Nach einer Weiterbildung der Erfindung ist das wärmeleitende Teil an einer inneren Wand des Gehäuses angeordnet.

Nach einer Weiterbildung der Erfindung ist das wärmeleitende Teil am Zellinneren angeordnet.

Gemäß der Erfindung ist das wärmeleitende Teil aus einem wärmeleitenden Material gebildet.

Gemäß der Erfindung ist das wärmeleitende Teil aus einem elektrisch isolierenden Material gebildet.

Das wärmeleitende Teil, z.B. ein elektrisch isolierendes Wärmeleitpad, verbindet den Temperatursensor und das Zellinnere, so dass die Temperatur des Zellinneren schnellstmöglich und frei von oder mit nur geringen äußeren Störeinflüssen (z. B. Auskühlung durch Luft im freien Luftvolumen um die Zelle herum) durch den Temperatursensor detektiert werden kann. Es ist von Vorteil, wenn dieses elektrisch isolierende aber gut wärmeleitende Material eine gewisse Flexibilität bzw. Elastizität aufweist, da dadurch die Anbringung des wärmeleitenden Teils im Gehäuse der Batteriezelle erleichtert werden kann und Fertigungstoleranzen kompensiert werden können.

Die vorliegende Erfindung schlägt ferner eine Hochvoltbatterie mit wenigstens einer obengenannten Batteriezelle vor.

Die vorliegende Erfindung schlägt ferner ein Elektrofahrzeug oder ein Hybridfahrzeug mit wenigstens einer obengenannten Hochvoltbatterie vor.

Erfindungsgemäß ist eine wärmeleitende Brücke zwischen dem Temperatursensor und dem Zellinneren durch das wärmeleitende Teil hergestellt. Das wärmeleitende Teil steht in unmittelbarem Wärmekontakt mit dem Zellinneren der Batteriezelle. Da die Wärmeübertragung zwischen dem Zellinneren und dem Temperatursensor optimiert wird und äußere Störeinflüsse reduziert werden, kann die aktuelle Temperatur des Zellinneren genau und schnell erkannt werden. Daher können die Genauigkeit und Schnelligkeit bzw. Rechtzeitigkeit der Temperaturmessung verbessert werden, ohne zusätzliche Messgeräte einzusetzen bzw. können eventuell vorhandene Vorhalte in Überwachungs- oder Plausibilisierungsmodellen reduziert werden.

Im Folgenden wird die Erfindung im Zusammenhang mit den Zeichnungen näher erläutert. Dabei zeigen:
- Fig.1: eine aus dem Stand der Technik bekannte Batteriezelle mit Temperatursensor; und
- Fig.2: eine Batteriezelle mit Temperatursensor gemäß einem Ausführungsbeispiel der Erfindung.

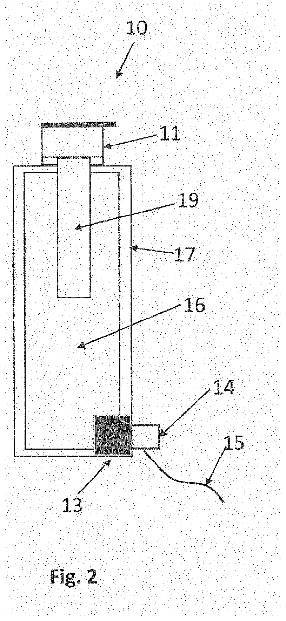

Das nachfolgend in Fig. 2 erläuterte Ausführungsbeispiel stellt eine bevorzugte Ausführungsform der vorliegenden Erfindung dar.

Die Batteriezelle 10 weist zwei elektrische Anschlüsse, von denen hier nur der elektrische Anschluss 11 zu erkennen ist, ein Gehäuse 17 und ein sich innerhalb des Gehäuses 17 befindendes Zellinneres 16 auf. Im Zellinneren finden die chemischen Reaktionen statt. Dadurch ist die chemische Energie zur elektrischen Energie umgewandelt. Die Batteriezelle 10 weist eine Elektrode 19 auf. Die Elektrode 19 erstreckt sich von dem Zellinneren 16 zu dem elektrischen Anschluss 11, um das Zellinnere 16 elektrisch mit dem elektrischen Anschluss 12 zu verbinden. Zwischen dem Gehäuse 17 und dem Zellinneren 16 ist das in das Gehäuse 17 gefüllte Gas vorgesehen. Wie oben erwähnt, können das in das Gehäuse 17 gefüllte Gas sowie das Gehäuse 17 die Wärmeübertragung zwischen dem Zellinneren 6 und dem Temperatursensor 4 beeinträchtigen.

Die Batteriezelle 10 weist ferner ein wärmeleitendes Teil 13 auf. Das wärmeleitende Teil 13 ist zumindest teilweise im Gehäuse 17 der Batteriezelle 10 angeordnet. Vorzugsweise kann das wärmeleitende Teil 13 ganz im Gehäuse 17 angeordnet werden. Außerdem ist das wärmeleitende Teil 13, welches aus einem wärmeleitenden Material gebildet sein kann, thermisch mit dem Temperatursensor verbunden. Das wärmeleitende Teil 13 steht in unmittelbarem Wärmekontakt bzw. unmittelbarem Kontakt mit dem Zellinneren 16. Das wärmeleitende Teil 13 kann an einer inneren Wand des Gehäuses 17 und / oder am Zellinneren 16 angeordnet sein. Das wärmeleitende Teil 13 erstreckt sich von dem Gehäuse 17 bis zu dem Zellinneren 16. Das wärmeleitende Teil 13 ist vorzugsweise aus einem gut wärmeleitenden Material, z.B. einem elektrisch isolierenden Wärmeleitpad, gebildet. Dadurch kann das wärmeleitende Teil 13 eine gleiche Temperatur aufweisen wie das Zellinnere 16 der Batteriezelle 10.

Da Ströme über die Elektrode 19 der Batteriezelle 10 fließen, können die Ströme die Temperatur der Elektrode 19 stark beeinflussen. Dies kann zu einer ungenaue Temperaturmessung des Zellinneren führen. Deswegen ist die Elektrode 19 der Batteriezelle 10 nicht dafür geeignet, als ein wärmeleitendes Teil zu dienen. Daher ist das wärmeleitende Teil von der Elektrode unterschiedlich. Außerdem soll der Temperatursensor nicht mit der Elektrode 19 in unmittelbarem Kontakt stehen, um eine ungewünschte Beeinflussung durch den über die Elektrode 19 fließenden Strom zu vermeiden.

Es ist von Vorteil, wenn dieses elektrisch isolierende aber gut wärmeleitende Material eine gewisse Flexibilität bzw. Elastizität aufweist, da dadurch die Anbringung des wärmeleitenden Teils 13 im Gehäuse 17 der Batteriezelle 10 erleichtert werden kann und Fertigungstoleranzen kompensiert werden können. Außerdem ist der Bauraum der erfindungsgemäßen Batteriezelle nicht vergrößert.

Ein gut wärmeleitendes Material kann beispielsweise Metall (Aluminium, Kupfer, Stahl usw.) oder Wärmeleitpad bzw. Wärmeleitpaste aus z.B. Silikongummi-Folien sein. Der Wert der Wärmeleitfähigkeit (Formelzeichen λ) des obengenannten wärmeleitenden Teils liegt über 3,5 W/(m · K).

Wegen der unmittelbaren thermischen Verbindung zwischen dem Temperatursensor 14 und dem wärmeleitenden Teil 13 kann die aktuelle Temperatur des Zellinneren mittels des Temperatursensors rechtzeitig und genau detektiert werden.

Ein Temperatursensor 14 weist eine Signalleitung 15 auf. Die gemessene Temperaturinformation kann durch die Signalleitung 15 zu der Steuereinheit der Hochvoltbatterie (nicht gezeigt) übertragen werden. Damit kann die Steuereinheit der Hochvoltbatterie entscheiden, ob die aktuelle Temperatur der Batteriezelle in einem vorbestimmten Temperaturbereich liegt. Je genauer und schneller die aktuelle Temperatur erkannt werden kann, desto optimaler kann die Batteriezelle entsprechend der aktuellen Temperatur der Batteriezelle 10 gesteuert werden, so dass die Leistungs- und Lebensdauervorteile der Batteriezellen erzielt werden können.

Der elektrische Anschluss 11 der Batteriezelle 10 ist als ein massiver Körper aus Metall z.B. Kupfer ausgebildet. Der Temperatursensor 14 ist durch z.B. Schweißen am Gehäuse 17 angeordnet. Die Batteriezelle 10 kann einen weiteren elektrischen Anschluss (nicht gezeigt) aufweisen.

Das wärmeleitende Teil 13 kann an irgendeiner geeigneten Stelle z.B. der Ober- bzw. Unterseite oder der seitliche Wand des Gehäuses 17 angeordnet werden. Wie in Fig. 2 dargestellt kann das wärmeleitende Teil 13 an einer dem elektrischen Anschluss 11 abgewandten Seite d.h. der in Fig. 2 gezeigten Unterseite des Gehäuses 17 angeordnet werden. Der Temperatursensor 14 kann vorzugsweise mittels des Gehäuses 17, dessen Wand üblicherweise aus Metall z.B. Aluminium gebildet ist, mit dem wärmeleitenden Teil 13 verbunden werden. Es ist vorzugsweise aber nicht zwingend, dass der Temperatursensor 14 und das wärmeleitende Teil 13 an derselbe Stelle der Wand des Gehäuses 17 angeordnet sind, wobei der Temperatursensor 14 außerhalb des Gehäuses 17 durch z.B. Schweißen angeordnet ist und das wärmeleitende Teil 13 innerhalb des Gehäuses 17 durch z.B. Kleben angeordnet ist.

## Patentansprüche

1. Batteriezelle (10) mit einer Elektrode (19), einem Gehäuse (17), einem sich innerhalb des Gehäuses (17) befindenden Zellinneren (16) und einem Temperatursensor (14),
wobei die Batteriezelle (10) ein wärmeleitendes Teil (13) mit einer Wärmeleitfähigkeit größer als 3,5 W/m·K aufweist, wobei das wärmeleitende Teil (13) von der Elektrode (19) unterschiedlich ist und ganz oder teilweise im Gehäuse (17) der Batteriezelle (10) angeordnet ist und thermisch mit dem Temperatursensor (14) verbunden ist;
wobei der Temperatursensor (14) außerhalb des Gehäuses (17) angeordnet ist; und
wobei das wärmeleitende Teil (13) an einer inneren Wand des Gehäuses (17), und / oder im Zellinneren (16) angeordnet ist,
wobei das wärmeleitende Teil (13) in unmittelbaren Wärmekontakt mit dem Zellinneren (16) steht; und
wobei das wärmeleitende Teil (13) aus einem elektrisch isolierenden Material gebildet ist.

2. Batteriezelle (10) gemäß Anspruch 1, wobei der Temperatursensor (14) am Gehäuse (17) angeordnet ist.

3. Batteriezelle (10) gemäß einem der vorherigen Ansprüche, wobei das wärmeleitende Teil (13) in unmittelbarem Wärmekontakt mit dem Temperatursensor (14) steht.

4. Hochvoltbatterie mit wenigstens einer Batteriezelle (10) gemäß einem der Ansprüche 1 - 3 aufweisend eine Mindestspannung von 60 V.

5. Elektrofahrzeug oder Hybridfahrzeug mit wenigstens einer Hochvoltbatterie gemäß Anspruch 4.

## Claims

1. Battery cell (10) comprising an electrode (19), a housing (17), a cell interior (16) which is located inside the housing (17), and a temperature sensor (14),
wherein the battery cell (10) comprises a thermally conductive part (13) with a thermal conductivity greater than 3.5 W/m K, wherein the thermally conductive part (13) is separate from the electrode (19) and is entirely or partially arranged in the housing (17) of the battery cell (10), and is thermally connected to the temperature sensor (14);
wherein the temperature sensor (14) is arranged outside the housing (17); and
wherein the thermally conductive part (13) is arranged on an inner wall of the housing (17) and/or in the cell interior (16),
wherein the thermally conductive part (13) is in direct thermal contact with the cell interior (16); and
wherein the thermally conductive part (13) is formed of an electrically insulating material.

2. Battery cell (10) according to Claim 1, wherein the temperature sensor (14) is arranged on the housing (17).

3. Battery cell (10) according to either one of the preceding claims, wherein the thermally conductive part (13) is in direct thermal contact with the temperature sensor (14).

4. High-voltage battery having at least one battery cell (10) according to any one of Claims 1-3 having a minimum voltage of 60 V.

5. Electric vehicle or hybrid vehicle comprising at least one high-voltage battery according to Claim 4.

## Revendications

1. Cellule de batterie (10), comprenant une électrode (19), un boîtier (17), un intérieur de cellule (16) se trouvant à l'intérieur du boîtier (17) et un capteur de température (14),
dans laquelle la cellule de batterie (10) présente une partie thermoconductrice (13) ayant une conductibilité thermique supérieure à 3,5 W/m K, dans laquelle la partie thermoconductrice (13) est différente de l'électrode (19) et est disposée entièrement ou partiellement dans le boîtier (17) de la cellule de batterie (10) et reliée thermiquement au capteur de température (14) ;
dans laquelle le capteur de température (14) est disposé à l'extérieur du boîtier (17) ; et
dans laquelle la partie thermoconductrice (13) est disposée sur une paroi intérieure du boîtier (17) et/ou dans l'intérieur de cellule (16),
dans laquelle la partie thermoconductrice (13) est en contact thermique direct avec l'intérieur de cellule (16) ; et
dans laquelle la partie thermoconductrice (13) est formée à partir d'un matériau électriquement isolant.

2. Cellule de batterie (10) selon la revendication 1, dans laquelle le capteur de température (14) est disposé sur le boîtier (17).

3. Cellule de batterie (10) selon l'une quelconque des revendications précédentes, dans laquelle la partie thermoconductrice (13) est en contact thermique direct avec le capteur de température (14).

4. Batterie haute tension, comprenant au moins une cellule de batterie (10) selon l'une quelconque des revendications 1 à 3, présentant une tension minimale de 60 V.

5. Véhicule électrique ou véhicule hybride, comprenant au moins une batterie haute tension selon la revendication 4.
